(19) Europäisches Patentamt
European Patent Office
Office européen des brevets

(11) **EP 2 755 123 A1**

(12) **EUROPEAN PATENT APPLICATION**

(43) Date of publication:
**16.07.2014 Bulletin 2014/29**

(51) Int Cl.:
***G06F 3/0488*** *(2013.01)*     ***G06F 3/038*** *(2013.01)*
***G06F 3/041*** *(2006.01)*     ***G06F 3/0354*** *(2013.01)*

(21) Application number: **13151074.5**

(22) Date of filing: **11.01.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **BlackBerry Limited
Waterloo, ON N2K 0A7 (CA)**

(72) Inventors:
• **Mankowski, Peter
Waterloo, ON, N2L 3W8 (CA)**

• **Geris, Ryan Alexander
Waterloo, ON, N2L 3W8 (CA)**
• **Abdelsamie, Ahmed
Waterloo, ON, N2L 3W8 (CA)**

(74) Representative: **Bryn-Jacobsen, Caelia
Kilburn & Strode LLP
20 Red Lion Street
London WC1R 4PJ (GB)**

Remarks:
Amended claims in accordance with Rule 137(2)
EPC.

(54) **Image zoom control using stylus force sensing**

(57)    The present disclosure provides for an electronic device and method for displaying an image on a screen of the electronic device. In response to a stylus location input, a region of the screen is selected. A first part of the image associated with the selected region of the screen is determined, along with a second part of the image associated with the region of the screen outside of the selected region. In response to a stylus force input, the first part of the image is modified and displayed in the selected region of the screen. The second part of the image is displayed on the screen outside of the selected region. The modified image may be a magnified image, for example.

*FIG. 2*

**Description**

BACKGROUND

Electronic devices may have relatively small display screens by which a user must access graphical user interfaces, visual media, drawing applications, and other applications and features provided by a device. Handheld smart-phones are an example of electronic devices that have a relatively small display screen. Some display screens have a "zoom" capability that allows a user to enlarge the image shown on the screen. The amount of zoom is controlled by user interaction with a control element, such as a slider, menu or pressure-sensitive control, shown on the screen. The zoom feature can be employed to enlarge the entire displayed image, so that a portion of the periphery of the images is lost from view.

While a local zoom feature in proximity to a stylus location or touch input may be provided, the level of zoom is predetermined and so a user has no convenient control over the level of zoom achieved. It would be useful and desirable to effectively, dynamically and easily control the zoom of a selected region of an electronic device screen.

BRIEF DESCRIPTION OF THE DRAWINGS

Exemplary embodiments of the present disclosure will be described below with reference to the included drawings such that like reference numerals refer to like elements and in which:

**FIG. 1** is a diagram of a system for displaying images, in accordance with exemplary embodiments of the present disclosure;

**FIG. 2** is a block diagram of an exemplary system for displaying images, in accordance with exemplary embodiments of the present disclosure;

**FIG's 3** and **4** are graphs showing illustrative image modification functions, in accordance with exemplary embodiments of the present disclosure;

**FIG's 5-8** are diagrammatic representations of a screen of an electronic device illustrating image zoom control using a sensed stylus force, in accordance with exemplary embodiments of the present disclosure; and

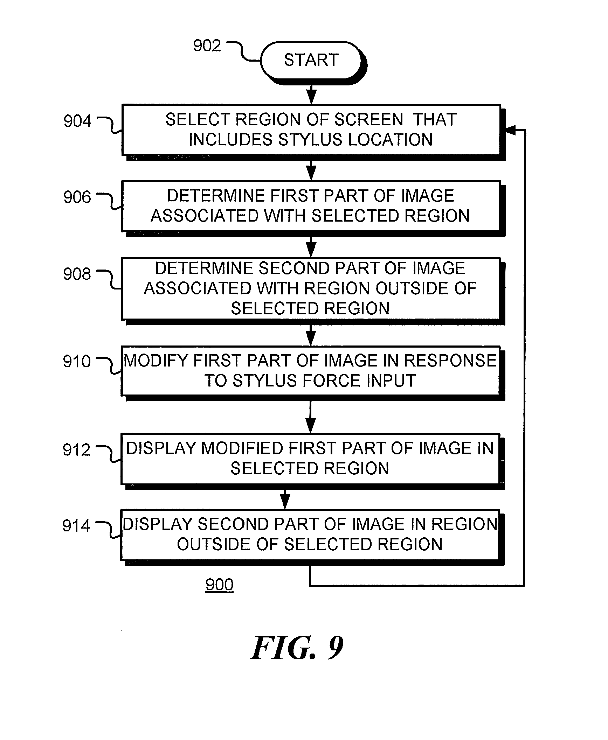

**FIG. 9** is a flow chart of a method for displaying an image on a screen of an electronic device, in accordance with exemplary embodiments of the disclosure.

DETAILED DESCRIPTION

For simplicity and clarity of illustration, reference numerals may be repeated among the figures to indicate corresponding or analogous elements. Numerous details are set forth to provide an understanding of the illustrative embodiments described herein. The embodiments may be practiced without these details. In other instances, well-known methods, procedures, and components have not been described in detail to avoid obscuring the disclosed embodiments. The description is not to be considered as limited to the scope of the embodiments shown and described herein.

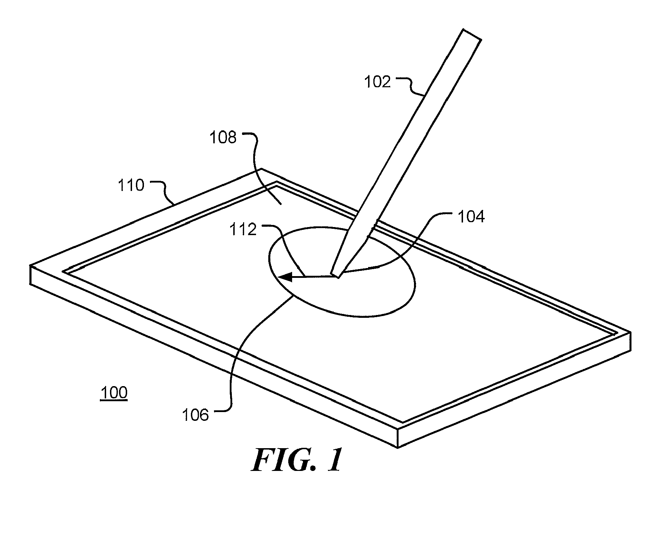

**FIG. 1** is a diagram of system 100 for displaying images, in accordance with exemplary embodiments of the present disclosure. The system 100 includes a stylus pointing device 102. The tip 104 of the stylus indicates a location on a screen 108 of an electronic device 110, from which a modification region 106 is determined. The location of the tip 104 of the stylus may be sensed by any of a number of techniques known to those in the art. The electronic device may be a handheld device, such as a smart-phone, personal digital assistant, or portable media player, for example; a portable device, such as a laptop computer or tablet computer, for example; or a desktop device, such as a desktop computer.

In accordance with one aspect of the present disclosure, operation of stylus 102 is used to modify an image displayed in the modification region 106. In particular, the image displayed in the modification region 106 may be enlarged by an amount dependent upon the contact force between the stylus 102 and the screen 108. In this example, the modification region 106 comprises a circle, but regions of other shapes, such as rectangular or elliptical, for instance, may be used. The shape may be defined by the user.

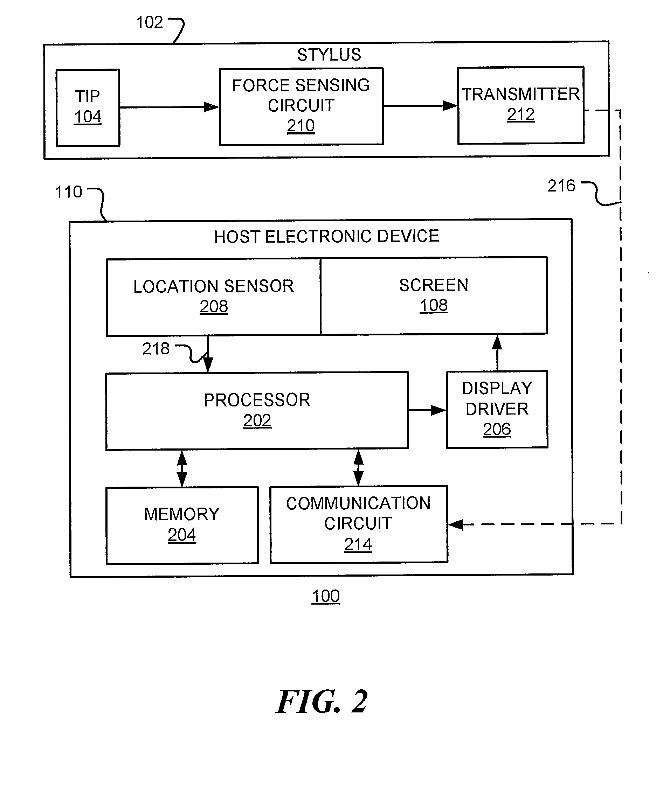

**FIG. 2** is a block diagram of an exemplary system 100 for displaying images, in accordance with exemplary embodiments of the present disclosure. An electronic device 110 has a screen 108, a memory 204 operable to store images and instructions for a processor 202. The processor 202 is operatively coupled to the memory 204 and, via display driver 206, to the screen 108. The processor 202 is responsive to a stylus location input 218 from a stylus location sensor 208. The system 100 also includes a stylus 102. In this embodiment, the stylus 102 has a tip 104 coupled to a force sensing circuit 210. The force sensing circuit 210 provides a stylus force signal to a wired or wireless transmitter 212 that, in turn, sends a stylus force input 216 to a communications circuit 214 of the electronic device 110. The processor 110 is responsive to the stylus force input 216 that, in this embodiment, is received via a communication circuit 214.

In further embodiments, the stylus contact force may be sensed by the electronic device, by the stylus, or by a combination thereof, and the stylus location may be sensed by the electronic device, the stylus, or a combination thereof.

In operation, the processor 202 modifies the part of an original image associated with a region of the screen 108 (determined from the stylus location input), and passes the modified image to display driver 206 for display on the screen 108. The modified image is dependent upon the original image and the modification is dependent upon the stylus force input 216. The modification region of the screen is determined at least in part by the stylus location, but may also depend upon the stylus force input 216. The modified image may be an enlarged image, for example, for which the degree of enlargement is dependent upon the stylus force input. The degree of enlargement at a position in the first image may also be dependent upon the distance of the position from the stylus location indicated by the stylus location input 218.

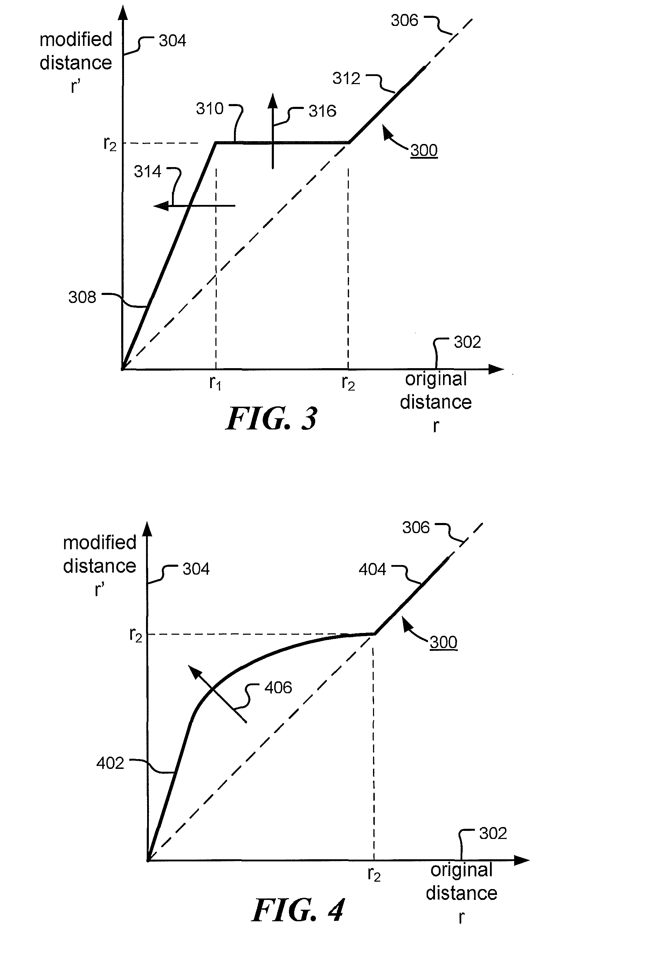

**FIG. 3** is a graph showing an illustrative relationship 300 between a position in an original image and a corresponding position in a modified image. That is, a pixel that would have been displayed at the original position is instead displayed at the corresponding position in the modified image. In this illustration, the modification region comprises a circle of radius $r_2$ centered at the current stylus location. The horizontal axis 302 shows the distance r of a position in the original image (relative to the stylus location), while the vertical axis 304 shows the distance $r'$ of a corresponding position in the modified image (again, relative to the stylus location). The relationship depicted by the broken line 306, results in an unmodified image. The line 300, which is composed of line segments 308, 310 and 312, indicates the relationship between the original image positions and the modified image positions for a particular stylus force value. The slope of the line segment 308 is greater than one, indicating that points in the original image within a circle of radius $r_1$ have been enlarged or magnified to fill the region within a circle of radius $r_2$. As the force increases, the relation may change. For instance, the line segment 314 may move in the direction of arrow 314. This increases the magnification or zoom of the region around the stylus location. Additionally, or alternatively, the line segment 310 may move in the direction indicated by arrow 316 as the stylus force increases. This increases the size of the modified region, which in this example is the region within a circle of radius $r_2$ centered at the stylus location. That is, the magnified region gets bigger as the user presses harder with the stylus on the device screen. The line segment 312 lies on the broken line 306, indicating that image points outside of the region are not modified. In this example, the region of the original image between radius $r_1$ and radius $r_2$, where the line segment 310 has zero slope, is not displayed.

**FIG. 4** is a graph showing a further illustrative relationship 300 between a position in an original image and a position in a modified image. In this illustration, the modification region again comprises a circle of radius $r_2$ centered at the current stylus location on the screen. The line 300, which is composed of line segments 402 and 404, indicates the relationship between the original image positions and the modified image positions for a particular stylus force value. The line segment 402 lies above and to the left of the broken line 306, indicating that corresponding points in the original image have been moved outwards from their original positions, relative to the stylus location. As the force increases, the relation may change as indicated by the arrow 406. This increases the magnification or zoom of the region closest to the stylus location. In this example, all the original image is displayed, but with varying degrees of magnification or contraction.

For each element of the image in the modification region, an element in the modified image is obtained by determining an original position of the element relative to the stylus location, and determining a modified position of the element as a function of the original position and the stylus force input. The element may be a pixel, for example.

In one embodiment, the relationship between an element position with polar coordinates $\{r',\theta'\}$ in the modified image and an element position with polar coordinates $\{r,\theta\}$ in the original image may be written as

$$\{r',\theta'\} = \{m(r,F)r,\theta\}, \qquad\qquad (1)$$

where $m$ is function of the radius $r$ and the stylus force $F$. Here, the origin of the coordinate system is taken to be the stylus location. $\theta$ denotes the directional angle of the position from the stylus location. The function $m$ may be defined in parametric form or a lookup table, for example. Equation (1) describes a radial distortion of the original image. Angular distortion may also be included, if desired.

Equivalently, in Cartesian coordinates $x$ and $y$ relative to the stylus location, the modified element position is

$$\{x',y'\} = \{m(r,F)x, m(r,F)y\}, \qquad\qquad (2)$$

where $r = \sqrt{x^2 + y^2}$. Other functional forms may be used. For example equation (2) may be used with $r=|x|+|y|$,

which introduces some angular distortion in addition to radial distortion.

In the example illustrated in **FIG. 3** discussed above, the function *m* is given by:

$$m(r,F) = \begin{cases} 1 + a(F) & r < r_1 \\ 0 & r_1 \le r \le r_2 \\ 1 & r > r_2 \end{cases} \qquad (3)$$

where $a(F)$ is an increasing function of $F$. The radius $r_2$ may also be a function of the stylus force F. When the function (3) is used, equations (1) and (2) (shown in **FIG. 3**) are piecewise linear functions of the radial position, $r$. In contrast, the function shown in **FIG. 4** is a non-linear function of the radial position.

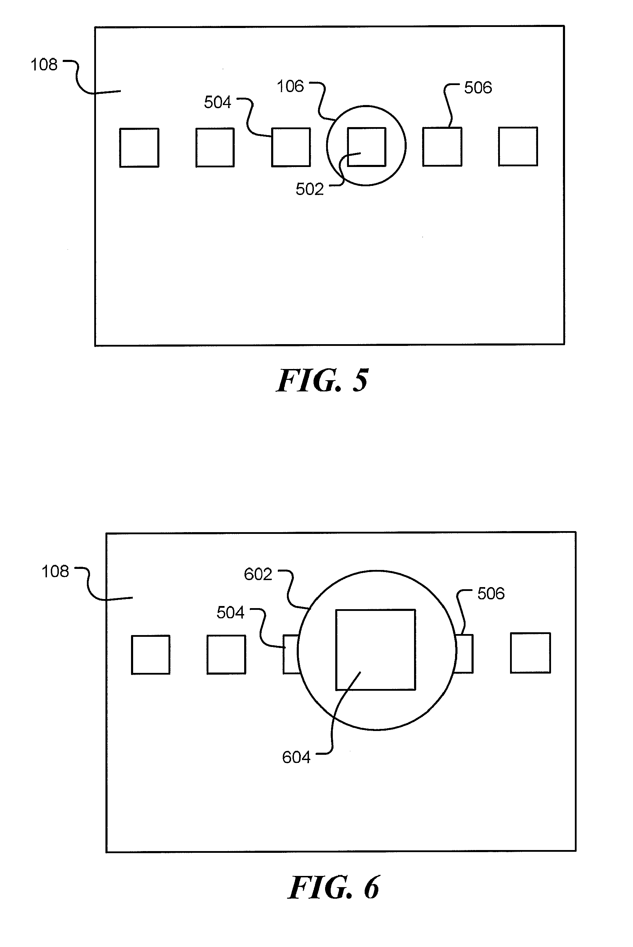

**FIG. 5** is a diagrammatic representation of a screen 108 of an electronic device. In this example, an original image comprising a number of square objects, such as 502, 504 and 506, are displayed on the screen 108. It is assumed that the stylus is pointed at the square object 502. The region 106 lies within a circle of radius $r_1$, such as shown in **FIG. 3**. The region 106 may be indicated by a translucent overlay, by a circle or not indicated. When the user applies a force to the stylus, the image within the region 106 is enlarged or magnified as depicted by region 602 in **FIG. 6**.

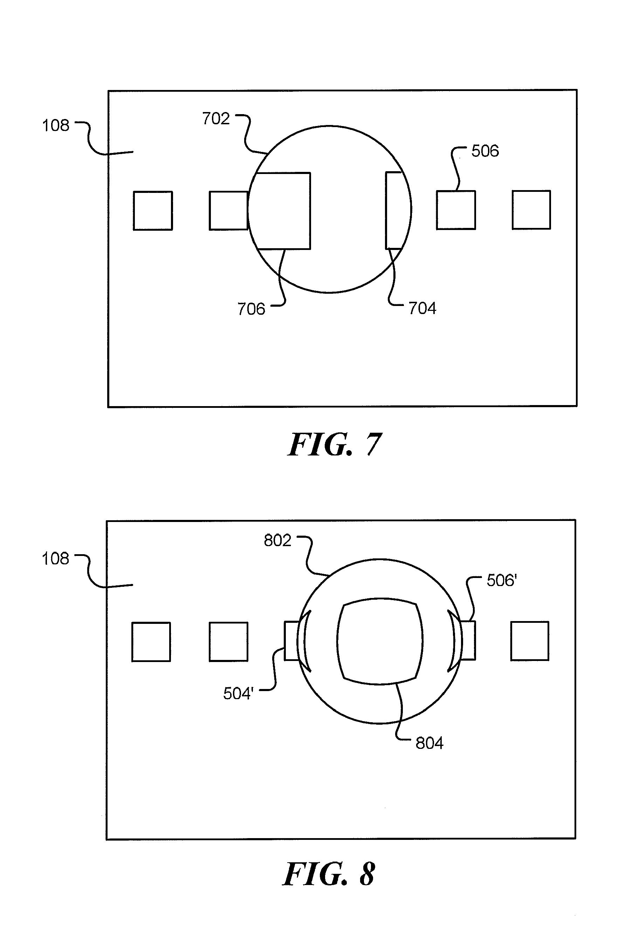

**FIG. 6** shows a modified region 602, comprising a circle of radius $r_2$, such as shown in **FIG. 3**), in which the original image is enlarged. The original image outside of region 602 is unchanged. In particular, the object 502 is enlarged to become object 604. The degree of enlargement is dependent upon the force applied to the stylus, as discussed with reference to **FIG. 3** above. Elements 504 and 506 are partially obscured. If the stylus is moved, the enlarged region moves to track the stylus location. This is illustrated in **FIG. 7**.

In **FIG. 7,** the stylus location has been moved towards the left of the screen 108, resulting in a modified region 702. Now, portions of the objects 502 and 504 (shown in **FIG. 5**) have been magnified. A portion of object 502 is shown as element 704 and a portion of the object 504 is shown as element 706.

The level of magnification achieved is dependent upon the stylus force applied to the stylus. In one embodiment, the magnification increases at the same rate as stylus force increases. However, magnification is only decreased slowly, or after a wait period, when stylus force is reduced. This enables the magnified region to be moved across the screen without the need to retain a high stylus force. In this embodiment, the modification to the image is dependent upon a stylus force input at one or more prior times.

**FIG. 8** is shows a modified region 802, comprising a circle of radius $r_2$, say, in which the original image is enlarged. The original image outside of region 802 is unchanged. The degree of enlargement is dependent upon the force applied to the stylus. In this example, the modification is a non-linear function as discussed with reference to **FIG. 4** above. Thus, none of the original image is obscured. The portion of the image inside the region 802 is modified dependent upon the stylus force and dependent upon the distance of each element of the image from the stylus location.

In particular, the object 502 (shown in **FIG. 5**) is enlarged to become object 804. The right side of object 504 is enlarged, as is the left side of object 506. Since the amount of magnification varies with position, at least some of the magnified image is distorted. If the initial portion of the line segment 402 in **FIG. 4** is linear, the central portion of region 802 will not be distorted. An advantage of this approach is that none of the original image is obscured.

The approach disclosed above provides a stylus-based electronic device with the ability to zoom in and out on a portion of the screen. A user can point a stylus pen at an area of the screen and, by varying the force or pressure applied to the stylus, zoom-in and zoom-out just that portion of the screen. The force may be sensed by a force sensor incorporated into the stylus. The sensed force is communicated to the host electronic device and is translated into a zoom area that gets bigger and/or more magnified the harder you press. The magnified area of the screen follows the location of the stylus, creating an effect similar to a magnifying glass.

**FIG. 9** is a flow chart of a method 900 for displaying an image on a screen of an electronic device, in accordance with embodiments of the disclosure. Following start block 902, a region of the screen is selected at block 904 in response to a stylus location input. The region includes the stylus location. At block 906 a first part of the image, associated with the selected region, is determined. At block 908, a second part of the image, associated with a region of the screen outside of the selected region, is determined. At block 910 the first part of the image is modified, in response to a stylus force input, to provide a modified first part of the image. At block 912 the modified first part of the image is displayed in the selected region of the screen. Finally, at block 914, the second, unmodified, part of the image is displayed on the screen outside of the selected region of the screen. Flow then returns to block 904, where the stylus location is updated to allow the selected region to track motion of the stylus across the screen. The first part of the image may be modified by enlarging it. For example, the first part of the image may be modified by a radial distortion relative to the stylus location and dependent upon the stylus force input. While the blocks of the flow chart are shown in order, some of the blocks may be performed together in time. Consider, for example, blocks 912 and 914. As a practical matter, the modified first part of the image and the second part of the image are displayed on the screen at the same time.

It will be appreciated that any module or component disclosed herein that executes instructions may include or otherwise have access to non-transient and tangible computer readable media such as storage media, computer storage media, or data storage devices (removable or non-removable) such as, for example, magnetic disks, optical disks, or tape data storage. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the server, any component of or related to the network, backend, etc., or accessible or connectable thereto. Any application or module herein described may be implemented using computer readable/executable instructions that may be stored or otherwise held by such computer readable media.

The implementations of the present disclosure described above are intended to be merely exemplary. It will be appreciated by those of skill in the art that alterations, modifications and variations to the illustrative embodiments disclosed herein may be made without departing from the scope of the present disclosure. Moreover, selected features from one or more of the above-described embodiments may be combined to create alternative embodiments not explicitly shown and described herein.

The present disclosure may be embodied in other specific forms without departing from its spirit or essential characteristics. The described exemplary embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

Aspects and features of the present disclosure are set out in the following items:

1. A non-transitory computer-readable medium having computer-executable instructions that, when executed by a processor, cause the processor to:

in response to a stylus location input, select a region of the screen;

determine a first part of the image associated with the selected region of the screen and a second part of the image associated with a region of the screen outside of the selected region;

in response to a stylus force input, modify the first part of the image to provide a modified first part of the image;

display the modified first part of the image in the selected region of the screen; and

display the second part of the image on the screen outside of the selected region of the screen.

2. The non-transitory computer-readable medium of item 1 where the element of modifying the first part of the image to provide a modified first part of the image in the method comprises:

for each element of a plurality of elements of the first part of the image:

determining an original position of the element relative to the stylus location; and

determining a modified position of the element as a function of the original position and the stylus force input.

3. The non-transitory computer-readable medium of item 2 where the function comprises a piecewise linear function.

4. The non-transitory computer-readable medium of item 2 where the function comprises a non-linear function.

**Claims**

**1.** A method for displaying an image on a screen 108 of an electronic device 110, the method comprising:

in response to a stylus location input 218 indicative of a stylus location 104 on the screen, selecting a region 602 of the screen 108;

determining a first part of the image 502 associated with the selected region 602 of the screen 108 and a second part of the image associated with a region of the screen 108 outside of the selected region 602;

in response to a stylus force input 216, modifying the first part of the image to provide a modified first part of the image 604;

displaying the modified first part of the image 604 in the selected region 602 of the screen 108; and

displaying the second part of the image on the screen outside of the selected region 602 of the screen 108.

2. The method of claim 1, where modifying the first part of the image 502 comprises enlarging the first part of the image.

3. The method of claim 1, where modifying the first part of the image 502 comprises distorting of the first part of the image is a radial direction relative to the stylus location and in response to the stylus force input 216.

4. The method of claim 1, further comprising:

sensing the stylus location 104 to provide the stylus location input 218.

5. The method of claim 1, further comprising:

receiving the stylus force input 216 from a stylus 102 in contact with the screen 108.

6. The method of claim 1, where modifying the first part of the image 502 is responsive to a force input signal at one or more prior times.

7. The method of claim 1, where modifying the first part of the image comprises:

for each element of a plurality of elements of the first part of the image:

determining an original position 302 of the element relative to the stylus location; and
determining a modified position 304 of the element as a function of the original position and the stylus force input 216.

8. The method of claim 7, where the function comprises a piecewise linear function (310, 312) of the original position.

9. The method of claim 7, where the function comprises a non-linear function (402, 404) of the original position.

10. An electronic device 110 comprising:

a screen 108;
a memory 204 operable to store a first image 502; and
a processor 202, operatively coupled to the memory 204 and the screen 108 and responsive to a stylus location input 218 and a stylus force input 216; the processor 202 operable to display a modified image 604 in a first region 602 of the screen 108 determined from the stylus location input 218, the modified image 604 dependent upon the first image 502 and having a modification dependent upon the stylus force input 216.

11. The electronic device of claim 10, where the first region 602 of the screen 108 is further determined from the stylus force input 216.

12. The electronic device of claim 10, where the modified image 604 comprises an enlarged image, the degree of enlargement responsive to the stylus force input 216.

13. The electronic device of claim 12, where the degree of enlargement at a position in the first image 502 is further dependent upon location of the position relative to a stylus location 104 indicated by the stylus location input 218.

14. The electronic device of claim 10, further comprising:

a communication circuit 214 operable to receive at least one of the stylus location input 218 and the stylus force input 216.

**15.** The electronic device of claim 10, further comprising:

a stylus location sensor 208, operable to provide the stylus location input 218.

**16.** The electronic device of claim 10, further comprising:

a stylus 102 incorporating a force sensor 210 and operable to provide the stylus force input 216.

**Amended claims in accordance with Rule 137(2) EPC.**

**1.** A method for displaying an image on a screen (108) of an electronic device (110), the method comprising:

in response to a stylus location input (218) indicative of a stylus location (104) on the screen, selecting a region (602) of the screen (108);
determining a first part of the image (502) associated with the selected region (602) of the screen (108) and a second part of the image associated with a region of the screen (108) outside of the selected region (602);
in response to a stylus location input and stylus force input (216), modifying the first part of the image to provide a modified first part of the image (604);
wherein the degree of modification at a position in the first part of the image is dependent upon the stylus force input and upon a distance of the position from the stylus location indicated by the stylus location input;
displaying the modified first part of the image (604) in the selected region (602) of the screen (108); and
displaying the second part of the image on the screen outside of the selected region (602) of the screen (108).

**2.** The method of claim 1, where modifying the first part of the image (502) comprises enlarging the first part of the image.

**3.** The method of claim 1, where modifying the first part of the image (502) comprises distorting of the first part of the image is a radial direction relative to the stylus location and in response to the stylus force input (216).

**4.** The method of claim 1, further comprising:

sensing the stylus location (104) to provide the stylus location input (218).

**5.** The method of claim 1, further comprising:

receiving the stylus force input (216) from a stylus (102) in contact with the screen (108).

**6.** The method of claim 1, where modifying the first part of the image (502) is responsive to a force input signal at one or more prior times.

**7.** The method of claim 1, where modifying the first part of the image comprises:

for each element of a plurality of elements of the first part of the image:

determining an original position (302) of the element relative to the stylus location; and
determining a modified position (304) of the element as a function of the original position and the stylus force input (216).

**8.** The method of claim 7, where the function comprises a piecewise linear function (310, 312) of the original position.

**9.** The method of claim 7, where the function comprises a non-linear function (402, 404) of the original position.

**10.** An electronic device (110) comprising:

a screen (108);

a memory (204) operable to store a first part of an image (502); and
a processor (202), operatively coupled to the memory (204) and the screen (108)
and responsive to a stylus location input (218) and a stylus force input (216);

the processor (202) operable to display a modified first part of the image (604) in a first region (602) of the screen (108) determined from the stylus location input (218), the modified image (604) dependent upon the first part of the image (502) and having a degree of modification dependent upon the stylus force input (216) at a position at the first part of the image and upon a distance of the position from the stylus location indicated by the stylus location input.

**11.** The electronic device of claim 10, where the first region (602) of the screen (108) is further determined from the stylus force input (216).

**12.** The electronic device of claim 10, where the modified first part of the image (604) comprises an enlarged image, the degree of enlargement responsive to the stylus force input (216).

**13.** The electronic device of claim 12, where the degree of enlargement at a position in the first part of the image (502) is further dependent upon location of the position relative to a stylus location (104) indicated by the stylus location input (218).

**14.** The electronic device of claim 10, further comprising:

a communication circuit (214) operable to receive at least one of the stylus location input (218) and the stylus force input (216).

**15.** The electronic device of claim 10, further comprising:

a stylus location sensor (208), operable to provide the stylus location input (218).

**16.** The electronic device of claim 10, further comprising:

a stylus (102) incorporating a force sensor (210) and operable to provide the stylus force input (216).

**1.** A method for displaying an image on a screen (108) of an electronic device (110), the method comprising:

in response to a stylus location input (218) indicative of a location (104) of a stylus (102) on the screen, selecting a region (602) of the screen (108);
determining a first part of the image (502) associated with the selected region (602) of the screen (108) and a second part of the image associated with a region of the screen (108) outside of the selected region (602);
in response to a stylus location input and stylus force input (216), the stylus force input (216) received from a force sensor (210) incorporated in the stylus (102), modifying the first part of the image to provide a modified first part of the image (604);
wherein the degree of modification at a position in the first part of the image is dependent upon the stylus force input and upon a distance of the position from the stylus location indicated by the stylus location input;
displaying the modified first part of the image (604) in the selected region (602) of the screen (108); and
displaying the second part of the image on the screen outside of the selected region (602) of the screen (108).

**2.** The method of claim 1, where modifying the first part of the image (502) comprises enlarging the first part of the image.

**3.** The method of claim 1, where modifying the first part of the image (502) comprises distorting of the first part of the image is a radial direction relative to the stylus location and in response to the stylus force input (216).

**4.** The method of claim 1, further comprising:

sensing the stylus location (104) to provide the stylus location input (218).

**5.** The method of claim 1, further comprising:

receiving the stylus force input (216) from a stylus (102) in contact with the screen (108).

**6.** The method of claim 1, where modifying the first part of the image (502) is responsive to a force input signal at one or more prior times.

**7.** The method of claim 1, where modifying the first part of the image comprises:

for each element of a plurality of elements of the first part of the image:

determining an original position (302) of the element relative to the stylus location; and
determining a modified position (304) of the element as a function of the original position and the stylus force input (216).

**8.** The method of claim 7, where the function comprises a piecewise linear function (310, 312) of the original position.

**9.** The method of claim 7, where the function comprises a non-linear function (402, 404) of the original position.

**10.** An electronic device 110 comprising:

a screen (108);
a memory (204) operable to store a first part of an image (502); and
a processor (202), operatively coupled to the memory (204) and the screen (108)
and responsive to a stylus location input (218) and a stylus force input (216);

the processor (202) operable to display a modified first part of the image (604) in a first region (602) of the screen (108) determined from the stylus location input (218), the modified image (604) dependent upon the first part of the image (502) and having a degree of modification dependent upon the stylus force input (216) at a position at the first part of the image and upon a distance of the position from the stylus location indicated by the stylus location input; further comprising a stylus (102) incorporating a force sensor (210) and operable to provide the stylus force input (216).

**11.** The electronic device of claim 10, where the first region (602) of the screen (108) is further determined from the stylus force input (216).

**12.** The electronic device of claim 10, where the modified first part of the image (604) comprises an enlarged image, the degree of enlargement responsive to the stylus force input (216).

**13.** The electronic device of claim 12, where the degree of enlargement at a position in the first part of the image (502) is further dependent upon location of the position relative to a stylus location (104) indicated by the stylus location input (218).

**14.** The electronic device of claim 10, further comprising:

a communication circuit (214) operable to receive at least one of the stylus location input (218) and the stylus force input (216).

**15.** The electronic device of claim 10, further comprising:

a stylus location sensor (208), operable to provide the stylus location input (218).

**FIG. 1**

102

STYLUS

| TIP 104 | → | FORCE SENSING CIRCUIT 210 | → | TRANSMITTER 212 |

216

110

HOST ELECTRONIC DEVICE

| LOCATION SENSOR 208 | SCREEN 108 |

218

PROCESSOR 202 → DISPLAY DRIVER 206

MEMORY 204

COMMUNICATION CIRCUIT 214

100

*FIG. 2*

*FIG. 3*

*FIG. 4*

**FIG. 5**

**FIG. 6**

**FIG. 7**

**FIG. 8**

902 — START

904 — SELECT REGION OF SCREEN THAT
INCLUDES STYLUS LOCATION

906 — DETERMINE FIRST PART OF IMAGE
ASSOCIATED WITH SELECTED REGION

908 — DETERMINE SECOND PART OF IMAGE
ASSOCIATED WITH REGION OUTSIDE OF
SELECTED REGION

910 — MODIFY FIRST PART OF IMAGE IN RESPONSE
TO STYLUS FORCE INPUT

912 — DISPLAY MODIFIED FIRST PART OF IMAGE IN
SELECTED REGION

914 — DISPLAY SECOND PART OF IMAGE IN REGION
OUTSIDE OF SELECTED REGION

900

*FIG. 9*

Europäisches
Patentamt

European
Patent Office

Office européen
des brevets

# EUROPEAN SEARCH REPORT

**Application Number**

EP 13 15 1074

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2010/090964 A1 (SOO ARMSTRONG [US] ET AL) 15 April 2010 (2010-04-15) * paragraphs [0007] - [0008], [0023], [0027] - [0042]; claims 1-20; figures 1-4 * | 1-16 | INV. G06F3/0488 G06F3/038 G06F3/041 G06F3/0354 |
| Y | US 2009/295830 A1 (MURAVEYNYK OLEG [GB] ET AL) 3 December 2009 (2009-12-03) * paragraphs [0008] - [0011], [0022] - [0037]; claims 9,14; figures 3-5 * | 1-16 | |
| Y | EP 2 530 677 A2 (SAMSUNG ELECTRONICS CO LTD [KR]) 5 December 2012 (2012-12-05) * paragraphs [0018] - [0036]; figures 1,2,3A,3B * | 1-16 | |
| Y | US 2011/057886 A1 (NG OLIVER [CA] ET AL) 10 March 2011 (2011-03-10) * paragraphs [0033], [0038], [0044], [0057] - [0060]; figures 1,3-7,10 * | 1-16 | |
| Y | US 2010/051356 A1 (STERN YUVAL [IL] ET AL) 4 March 2010 (2010-03-04) * paragraphs [0007] - [0055], [0127], [0128]; figures 1A,1B * | 5,14 | TECHNICAL FIELDS SEARCHED (IPC)  G06F |
| A | US 2007/097151 A1 (ROSENBERG LOUIS B [US]) 3 May 2007 (2007-05-03) * paragraphs [0052] - [0053]; figure 6 * | 1-16 | |

The present search report has been drawn up for all claims

| Place of search | Date of completion of the search | Examiner |
|---|---|---|
| Munich | 18 June 2013 | Dixon-Hundertpfund |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 15 1074

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2013

| Patent document cited in search report | | Publication date | Patent family member(s) | | Publication date |
|---|---|---|---|---|---|
| US 2010090964 | A1 | 15-04-2010 | US 2010090964 A1<br>US 2012268409 A1 | | 15-04-2010<br>25-10-2012 |
| US 2009295830 | A1 | 03-12-2009 | US 2009295830 A1<br>WO 2010142592 A1 | | 03-12-2009<br>16-12-2010 |
| EP 2530677 | A2 | 05-12-2012 | EP 2530677 A2<br>KR 20120133365 A<br>US 2012308204 A1<br>WO 2012165867 A2 | | 05-12-2012<br>10-12-2012<br>06-12-2012<br>06-12-2012 |
| US 2011057886 | A1 | 10-03-2011 | NONE | | |
| US 2010051356 | A1 | 04-03-2010 | NONE | | |
| US 2007097151 | A1 | 03-05-2007 | NONE | | |

EPO FORM P0459

For more details about this annex : see Official Journal of the European Patent Office, No. 12/82